# EUROPÄISCHE PATENTSCHRIFT

(11) **EP 4 266 963 B1**
(45) Veröffentlichungstag und Bekanntmachung des Hinweises auf die Patenterteilung: **29.01.2025**
(21) Anmeldenummer: 21843746.5
(22) Anmeldetag: 23.12.2021
(51) Int. Cl.: F16N 39/00, F16N 39/06, B01D 29/07, F01M 11/03, B01D 29/52, B01D 35/26, A47J 37/12

(54) **VORRICHTUNG ZUM ENTFERNEN VON FREMDSTOFFEN AUS EINER FLÜSSIGKEIT**
DEVICE FOR REMOVING FOREIGN MATTER FROM A LIQUID
DISPOSITIF D'ÉLIMINATION DE MATIÈRE ÉTRANGÈRE D'UN LIQUIDE

(30) Priorität: 23.12.2020 DE 102020134844
(43) Veröffentlichungstag der Anmeldung: 01.11.2023
(73) Patentinhaber: VITO AG, 78532 Tuttlingen (DE)
(72) Erfinder: SCHMIDT, Andreas, 78532 Tuttlingen (DE)
(74) Vertreter: Patentanwälte und Rechtsanwalt Weiß, Arat & Partner mbB
(86) Internationale Anmeldenummer: PCT/EP2021/087452
(87) Internationale Veröffentlichungsnummer: WO 2022/136625

(56) Entgegenhaltungen:
- WO-A1-02/28505
- WO-A1-2019/171411
- KR-A- 20180 017 510

## Beschreibung

Die Erfindung betrifft eine Vorrichtung zum Entfernen von Fremdstoffen aus einer Flüssigkeit mittels zumindest einem Filter, wobei die Flüssigkeit mit den Fremdstoffen aus einem Bad mittels einem Rotor über einen Einlass in einem Gehäuse dem Filter zugeführt wird.

### Stand der Technik

Es gibt im privaten oder auch im industriellen Bereich eine Vielzahl von Flüssigkeiten, die gereinigt werden müssen. Hierzu zählen beispielsweise Kühloder Schmiermittelbäder bei Werkzeugmaschinen oder auch Speiseöle z.B. aus Fritteusen. Dies sind nur wenige Beispiel, die Erfindung soll sich jedoch auf alle möglichen zu reinigenden Flüssigkeiten beziehen.

In der Regel wird die Flüssigkeit von Zeit zu Zeit aus einem Speichertank entnommen und einer Vorrichtung zum Reinigen dieser Flüssigkeit zugeleitet. Von dort gelangt dann die Flüssigkeit wieder zurück zum Speichertank. Oftmals wird auch nur die Oberfläche der Flüssigkeit abgesaugt, damit die aufschwimmenden leichten Stoffe entfernt werden. Die schweren Verschmutzungspartikel werden dann von Zeit zu Zeit, nachdem sie sich abgesetzt haben, nach unten entnommen.

Vorgänger der vorliegenden Erfindung ist die EP 1 326 692 B1, bei der der Rotor mit Flügeln zum Ansaugen der Flüssigkeit durch Ausnehmungen in der Rotorscheibe und zum Weiterdrücken der Flüssigkeit in den Schacht besetzt ist. Dabei soll zwischen Schacht und Filter ein Vorraum in dem Filtergehäuse ausgebildet sein und dieses Filtergehäuse mit dem Tauchgehäuse entfernbar zugeordnet werden.

In der Praxis hat sich diese Vorrichtung hervorragend bewährt.

### Aufgabe

Aufgabe der vorliegenden Erfindung ist es, die o.g. Vorrichtung weiter zu verbessern und ihre Effizienz zu steigern.

### Lösung der Aufgabe

Zur Lösung der Aufgabe führt, dass sich der Einlass säulenartig vertikal im Inneren des Gehäuses über zumindest einen Großteil einer Rückwand des Gehäuses gegenüber dem Filter erstreckt und frontseitig Auslässe aufweist und an zumindest einer Seitenwand des Gehäuses eine Kammer zur Rückführung der Flüssigkeit in das Bad vorgesehen ist, die zum Inneren des Gehäuses hin von einem Innenfilter abgedeckt ist.

Damit wird zum einen erreicht, dass die gesamte Reinigungseinheit nur noch aus einem Gehäuses mit entsprechenden Filtereinsätzen besteht. Insofern kann die gesamte Einheit wesentlich kompakter gehalten werden.

Ein weiterer wesentlicher Vorteil ist, dass der Einlass für die zu reinigenden Flüssigkeit möglichst weit entfernt von dem Feinstfilter angeordnet ist, so dass sich die Flüssigkeit in dem gesamten Gehäuse verteilen kann. Diese Verbesserung ermöglicht auch, dass die gereinigte Flüssigkeit nicht nur die Reinigungseinheit an einer Seite, nämlich der dem Einlass gegenüberliegenden Stirnseite erfolgt, sondern auch jeweils seitlich in den Seitenwänden vorgenommen werden kann. Die Flüssigkeit wird von dem Rotor in den säulenartigen Einlass eingedrückt und verlässt diesen säulenartigen Einlass durch frontseitige Auslässe bzw. seitliche Öffnungen unterhalb der Decke bzw. ggf. einer Zwischendecke des Gehäuses. Auf diese Weise erfolgt eine wesentlich verbesserte vertikale Verteilung der Flüssigkeit in dem Gehäuse.

Bevorzugt soll die Reinigung der Flüssigkeit aber auch an weiteren Stellen des Gehäuses, insbesondere an den Seitenwänden, erfolgen. Hierzu sind erfindungsgemäss an den Seitenwänden des Gehäuses Kammern ausgebildet, denen ein Innenfilter vorgesetzt ist, durch den die Flüssigkeit in die Kammer einströmen muss, von der aus wieder eine Rückführung in das Bad erfolgt. Bevorzugt liegt dabei im Rahmen der Erfindung, dass diese Innenfilter entfernbar aus dem Gehäuses ausgebildet sind, so dass je nach zu reinigender Flüssigkeit die Möglichkeit einer Variation der Filteröffnungen besteht. Wird eine grobe Filterung gewünscht, so sind die Filteröffnungen grösser als bei einer feinen Filterung.

Bevorzugt besteht der Innenfilter aus einer dünnen Metallplatte, in welche diese Filteröffnungen eingeformt sind. Des Weiteren sind an einer Randkante des Innenfilters weitere Aufnahmen bzw. Halterungen für den textilen Filter vorgesehen, der dann von einem mit dem Gehäuse verbundenen Frontdeckel überdeckt wird.

Damit ein Auswechseln des Innenfilters erleichtert ist, besitzt der Innenfilter Eingriffsöffnungen bzw. Griffe zum Bewegen des Innenfilters. Dabei wird der Innenfilter bevorzugt in oder an Schienen geführt, welche an der Decke und/oder am Boden des Gehäuses vorgesehen sind. Diese Schienen verlaufen dabei so nahe wie möglich an einem Vertikalstreifen entlang, welcher von der Innenseite der Seitenwand des Gehäuses nach innen abragt. Auf diese Weise wird eine beinahe geschlossene Kammer gebildet, die in Gebrauchslage von den Filteröffnungen des Innenfilters abgedeckt ist.

Der oben erwähnte Feinstfilter besteht bevorzugt aus einem textilen Werkstoff und wird bereits in der im Stand der Technik beschriebenen Europäischen Patentschrift der Anmelderin erwähnt.

In der Praxis hat sich herausgestellt, dass durch diese Möglichkeit der mehrseitigen Filterung der Flüssigkeit in dem Gehäuse die Effizienz der Vorrichtung wesentlich erhöht wird.

Dieser Steigerung der Effizienz dient auch eine besondere Ausgestaltung des Rotors, mit dem die Flüssigkeit angesaugt und in das Gehäuse eingeführt wird. Für diese Ausgestaltung soll auch separat Schutz begehrt werden, natürlich hat sie sich vor allem in Kombination mit dem oben beschriebenen Erfindungsgedanken wesentlich bewährt. Dabei soll der Rotor als Doppelrotor ausgebildet sein, indem an der Drehwelle eine geschlossene Scheibe sitzt, welche über Flügel mit einem Ring verbunden ist, durch dessen Öffnung die Flüssigkeit in den Rotor eintritt. Dieser Doppelrotor ermöglicht es, etwa die zehnfache Menge der Flüssigkeit pro Zeiteinheit in den Einlass und somit in das Gehäuse einzudrücken.

Insgesamt sitzt der Rotor in einem Blechpaket, welches nach unten durch ein Abschlussblech abgedeckt ist, das eine Öffnung aufweist, deren Durchmesser grösser als die Öffnung des Ringes aber kleiner als der Durchmesser des Ringes ist. Hierdurch wird die Flüssigkeit in den Innenraum des Rotors eingesaugt.

Auf das Abschlussblech folgt ein Blechpaket, welches eine zylindrische Ausnehmung ausbildet, in der der Rotor dreht. Allerdings wird diese zylindrische Ausnehmung zu dem oben erwähnten Einlass hin von einer Erweiterung unterbrochen, durch welche die Flüssigkeit vom Rotor in den Einlass gelangt. Von dort strömt sie in das Gehäuse.

Die Neuentwicklung zeichnet sich vor allem auch durch Verbesserungen in der Elektroeinheit bzw. Steuereinheit aus. Hierzu gehört vor allem auch, dass die Steuereinheit drahtlos mit einer App verbunden werden kann, so dass die Steuerung der gesamten Vorrichtung auch von dieser App aus erfolgen kann. In der App werden auch alle Gerätedaten, wie insbesondere Gesamtlaufzeit, Gesamtzyklus und maximale Temperatur erfasst und gespeichert. Sie beinhaltet auch insbesondere die Überwachung eines Kippwinkels der Vorrichtung, wobei in Ansehung des Kippwinkels auch ein Umkippschutz aktiviert und angepasst werden kann. Ähnliches gilt auch für einen Schutz vor Vergessen der Vorrichtung in beispielweise der Fritteuse. Dies sind aber nur einige wenige Verbesserungen in der Steuerung.

### Figurenbeschreibung

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
**Figur 1** eine Seitenansicht einer erfindungsgemässen Vorrichtung zum Entfernen von Fremdstoffen aus einer Flüssigkeit;
**Figur 2** eine Frontansicht der Vorrichtung gemäss Figur 1;
**Figur 3** eine Draufsicht auf die Vorrichtung gemäss Figur 1;
**Figur 4** eine perspektivische Explosionsdarstellung der Vorrichtung gemäss Figur 1;
**Figur 5** eine perspektivische Explosionsdarstellung einer Reinigungseinheit der Vorrichtung gemäss Figur 1;
**Figur 6** eine perspektivische Explosionsdarstellung von Teilen der Reinigungseinheit gegenüber der Darstellung gemäss Figur 5 um etwa 90° gedreht;
**Figur 7** eine perspektivische Explosionsdarstellung eines Teils der Reinigungseinheit der Vorrichtung gemäss Figur 1;
**Figur 8** eine Frontansicht der Reinigungseinheit der Vorrichtung gemäss Figur 1 mit abgenommenem Frontdeckel;
**Figur 9** einen Querschnitt durch das Reinigungsteil gemäss Figur 7 entlang Linie VIII-VIII.

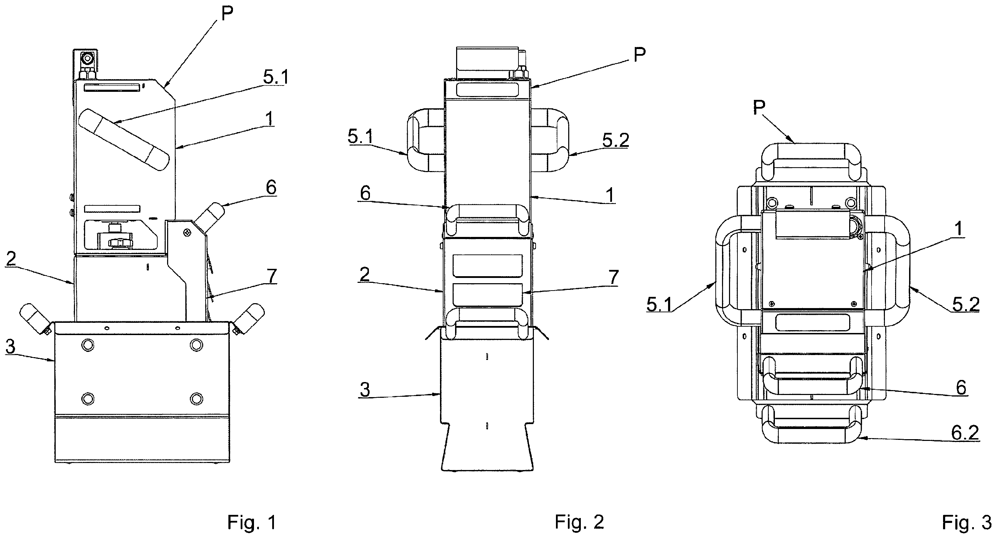

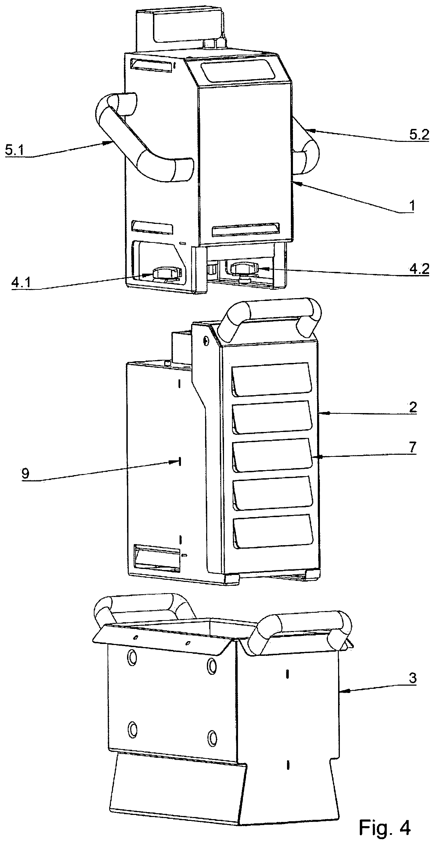

Gemäss den Figuren 1 bis 4 weist eine erfindungsgemässe Vorrichtung P zum Entfernen von Fremdstoffen aus einer Flüssigkeit eine Elektroeinheit 1, eine Reinigungseinheit 2 und eine Auffangwanne 3 auf. Die Elektroeinheit 1 und die Reinigungseinheit 2 sind über lösbare Befestigungsmittel 4.1 und 4.2, beispielsweise entsprechende Schrauben, miteinander verbunden. Im miteinander verbundenen Gebrauchszustand bilden sie eine mit Hilfe von Griffen 5.1 und 5.2 tragbare Einheit und können zusammen in die Auffangwanne 3 gesetzt werden. Ist die Reinigungseinheit 2 durch Lösen der Befestigungsmittel 4.1 und 4.2 von der Elektroeinheit 1 getrennt, so kann diese Reinigungseinheit 2 mit Hilfe eines weiteren Griffes 6 gehandhabt werden. Da sich der Griff 6 an einem Frontdeckel 7 befindet, der über eine Gelenkstange 8 mit einem Gehäuse 9 der Reinigungseinheit 2 verbunden ist, kann mittels des Griffes 6 auch dieser Frontdeckel 7 um die Gelenkstange 8 gedreht und damit das Innere des Gehäuses 9 geöffnet werden.

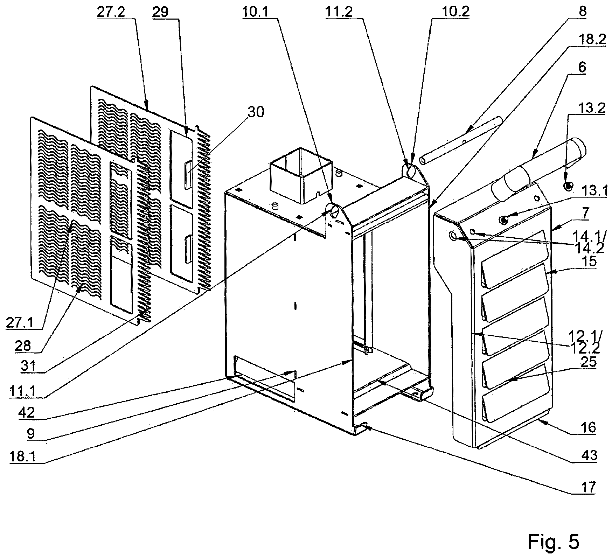

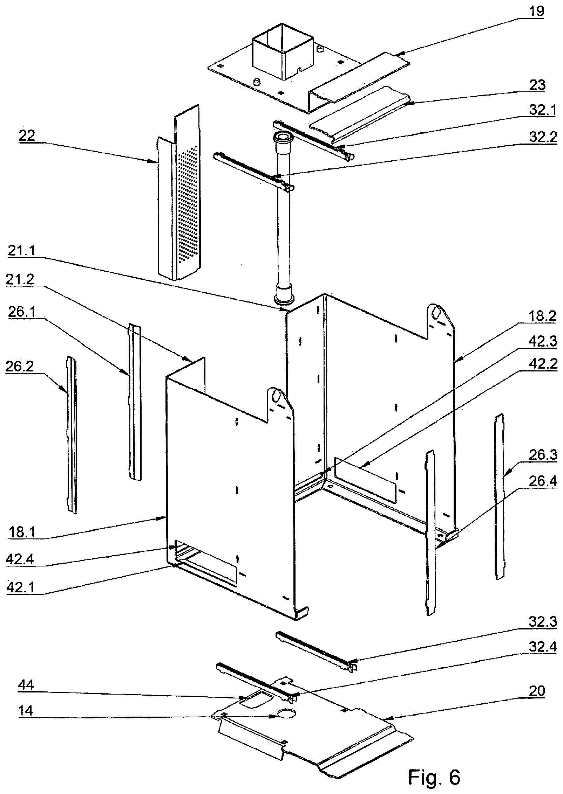

Da sich die vorliegende Erfindung im wesentlichen auf die Reinigungseinheit 2 bezieht, ist diese im Detail in den Figuren 5 bis 9 näher gezeigt. Erkennbar ist das Gehäuse 9, an dem über die Gelenkstange 8 der Frontdeckel 7 gelenkig verbunden ist. Hierzu weist das Gehäuse 9 in nach oben abstehenden Laschen 10.1 und 10.2 zwei Langlöcher 11.1 und 11.2 auf, zwischen welche die Gelenkstange 8 eingesetzt wird und die der Frontdeckel 7 seitlich mit Seitenwänden 12.1 und 12.2 übergreift, wobei entsprechende Schrauben 13.1 und 13.2 Löcher 14.1 und 14.2 in dem Frontdeckel 7 durchsetzen und in nicht näher gezeigte Gewindebohrungen in der Gelenkstange 8 eingreifen.

Frontwärtig ist in dem Frontdeckel 7 hinter Abschirmblechen 15 eine Vielzahl von Löchern vorgesehen, durch welche gereinigte Flüssigkeit austreten kann. Ferner weist der Frontdeckel 7 in seinem unteren Bereich einen Steckstreifen 16 auf, mit welchem der Frontdeckel 7 in Einbaulage entsprechende Anschläge 17 am Gehäuse 9 hintergreift, so dass er das Gehäuse 9 abschliesst. Soll er geöffnet werden, wird der Frontdeckel 7 an dem Griff 6 nach oben gezogen, so dass die Schrauben 13.1 und 13.2 entlang den Langlöchern 11.1 und 11.2 nach oben gleiten, bis der Steckstreifen 16 ausser Eingriff mit dem Anschlag 17 gelangt.

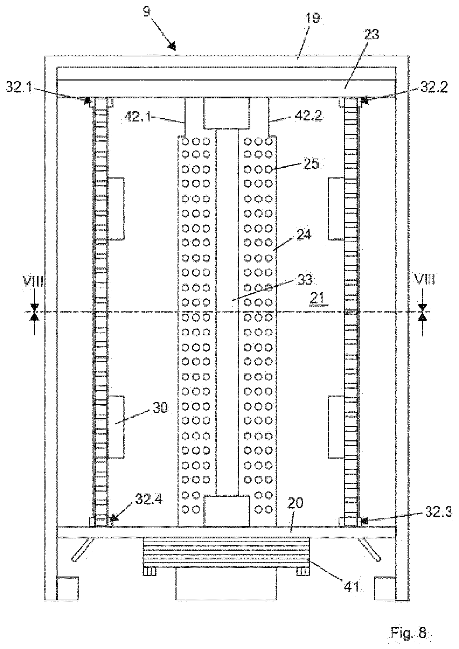

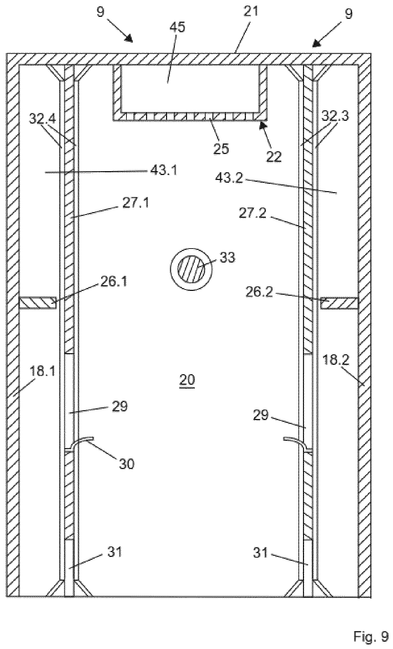

Das Gehäuse 9 weist zwei Seitenwände 18.1 und 18.2, eine Decke 19, einen Boden 20 sowie eine Rückwand 21 auf. Im Inneren des Gehäuses befindet sich gemäss den Figuren 8 und 9 ein säulenförmiger Einlass 22, der sich vom Boden 20 bis zu einer Zwischendecke 23 kurz unterhalb der Decke 19 erstreckt. Auf seiner Frontseite 24 sind eine Vielzahl von Auslässen 25 erkennbar. Unterhalb der Zwischendecke 23 lassen nicht näher benannte Seitenwände des säulenartigen Einlasses 22 grössere seitliche Austrittsöffnungen 42.1 und 42.2 auf. Von dem Einlass 22 und der Rückwand 21 umfangen ist eine Übertrittsöffnung 45 in dem Boden 20 vorgesehen, deren Anbindung später beschrieben wird.

Etwa in der Mitte des Gehäuses 9 sind von den Seitenwänden 18.1 und 18.2 nach innen abstehend jeweils Vertikalstreifen 26.1 und 26.2 vorgesehen, die zusammen mit jeweils einem Innenfilter 27.1 und 27.2 eine Kammer 43.1 und 43.2 ausbilden.

Jeder Innenfilter 27 ist bevorzugt aus einer Metallplatte hergestellt und weist Filteröffnungen 28 auf. Neben den Filteröffnungen 28 besitzt der Innenfilter 27.1 bzw. 27.2 zwei Eingriffsöffnungen 29, in deren Bereich jeweils ein Griff 30 vorgesehen ist. Stirnwärtig sind dem Innenfilter 27.1 bzw. 27.2 zackenartige Aufnahmen bzw. Halterungen 31 für einen später beschriebenen textilen Filter vorgesehen.

In dem Gehäuse 1 werden die Innenfilter 27.1 und 27.2 in Schienen 32.1 bis 32.4 geführt. Dabei verlaufen die Schienen 32.3 und 32.4 entlang dem Boden 20 bis zur Rückwand 21, während die Schienen 32.1 und 32.2 entsprechend an der Zwischendecke 23 angeordnet sind.

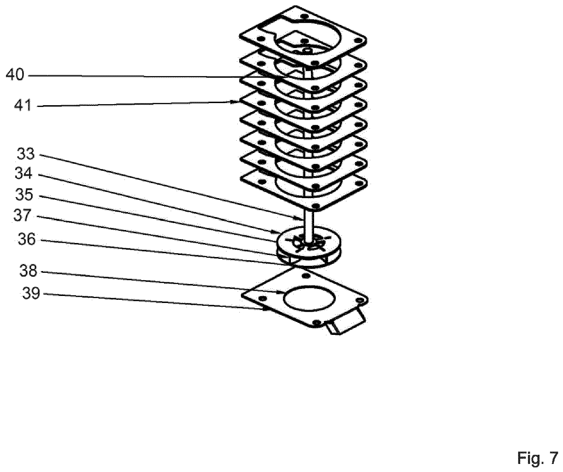

Das Gehäuse 9 wird ferner von einer Drehwelle 33 durchzogen, welche dem Antrieb eines Rotors 34 dient. Dieser Rotor 34 und seine direkte Umgebung sind in Figur 7 gezeigt. Erkennbar ist, dass der Rotor 34 aus einer oberen Scheibe 35 und einem endwärtigen Ring 36 besteht, wobei Scheibe 35 und Ring 36 über Flügel 37 miteinander verbunden sind. Der Ring 36 umfängt, in Figur 7 nicht gezeigt, eine grössere Öffnung entsprechend der Öffnung 38 in einer Abschlussplatte 39. Diese Öffnung in dem Ring 36 gewährleistet, dass zu reinigende Flüssigkeit in den Rotor 34 bis zu der geschlossenen Scheibe 35 zwischen die Flügel 37 eintreten kann, wobei dann die Weiterleitung der Flüssigkeit in eine Erweiterung 40 in einem Blechpaket 41 erfolgt. Die Erweiterung 40 leitet die Flüssigkeit durch die Übertrittsöffnung 45 in den säulenförmigen Einlass 22 an der Rückwand 21 des Gehäuses weiter, wobei im Bereich der Erweiterung 40 und des Einlasses 22 der Boden 20 des Gehäuses 9 aufgebrochen ist.

Die Funktionsweise der vorliegenden Erfindung ist folgende:
Zum Entfernern von Fremdstoffen aus einer Flüssigkeit wird die Vorrichtung bestehend aus Elektroeinheit 1 und Reinigungseinheit 2 in ein entsprechendes Flüssigkeitsbad eingesetzt. Über die Elektroeinheit 1 wird die Drehwelle 33 und damit der Rotor 34 in dem Blechpakte 41 in Gang gesetzt. Dieser Rotor 34 saugt durch den Ring 36 unterstützt von den Flügeln 37 Flüssigkeit mit Fremdstoffen an und drückt diese Flüssigkeit in die Erweiterung 40 des Blechpaketes 41 und weiter durch die Übertrittsöffnung 45 in den säulenartigen Einlass 22. In der Praxis hat sich herausgestellt, dass durch diesen DoppelRotor aus geschlossener Scheibe 35, offenem Ring 36 und Flügel 37 eine Ansaugleistung um das 1 0fache gesteigert werden kann.

Die Flüssigkeit tritt dann zum einen aus den Auslässen 25 und den seitlichen Auslässen 42.1 und 42.2 in den Innenraum des Gehäuses 9 aus. Hierdurch wird eine sehr gute und gleichmässige Verteilung der Flüssigkeit über die Höhe des Innenraums des Gehäuses 9 ermöglicht.

Ferner ist hervorzuheben, dass die Flüssigkeit gemäss der vorliegenden Erfindung sehr weit entfernt ist von dem vorderen Filter in dem Frontdeckel 7, gehalten durch die Aufnahmen bzw. Halterungen 31, die von den Innenfiltern 27.1 und 27.2 abstehen, eintritt und sich gleichmäßig in dem Gehäuseinneren verteilen kann. Hierdurch wird eine wesentlich bessere Verteilung der zu reinigenden Flüssigkeit im gesamten Innenraum des Gehäuses 9 ermöglicht.

Außerdem wird die Möglichkeit eröffnet, nicht nur den Filter im Frontdeckel 7 für eine Reinigung zu benutzen, sondern auch weitere Einbauten in dem Gehäuse 9 vorzusehen, die der Reinigung dienen können. Zu diesem Zweck durchströmt die Flüssigkeit die Filteröffnungen 28 in den Innenfiltern 27.1 und 27.2, wird dort gefiltert und gelangt dann in die jeweilige Kammer 43.1 bzw. 43.2. Von dort tritt sie dann aus unteren Öffnungen 44 in den jeweiligen Seitenwänden 18.1 bzw. 18.2 aus und gelangt wieder zurück ins Bad.

Eine Feinstfilterung der Flüssigkeit erfolgt ferner durch den nicht näher gezeigten textilen Filter in dem Frontdeckel 7, wobei dort dann die gereinigte Flüssigkeit durch die von dem Abschirmblech 15 abgedeckten Öffnungen austritt.

### Bezugszeichenliste

| | | | | | |
|---|---|---|---|---|---|
| 1 | Elektroeinheit | 34 | Rotor | 67 | |
| 2 | Reinigungseinheit | 35 | Scheibe | 68 | |
| 3 | Auffangwanne | 36 | Ring | 69 | |
| 4 | Befestigungsmittel | 37 | Flügel | 70 | |
| 5 | Griff | 38 | Öffnung | 71 | |
| 6 | Griff | 39 | Abschlussplatte | 72 | |
| 7 | Frontdeckel | 40 | Erweiterung | 73 | |
| 8 | Gelenkstange | 41 | Blechpaket | 74 | |
| 9 | Gehäuse | 42 | Seitliche Austrittsöffnung | 75 | |
| 10 | Lasche | 43 | Kammer | 76 | |
| 11 | Langloch | 44 | untere Öffnung | 77 | |
| 12 | Seitenwand | 45 | Übertrittsöffnung | 78 | |
| 13 | Schraube | 46 | | 79 | |
| 14 | Loch | 47 | | | |
| 15 | Abschirmblech | 48 | | | |
| 16 | Steckstreifen | 49 | | | |
| 17 | Anschlag | 50 | | | |
| 18 | Seitenwand | 51 | | | |
| 19 | Decke | 52 | | | |
| 20 | Boden | 53 | | | |
| 21 | Rückwand | 54 | | | |
| 22 | Einlass | 55 | | | |
| 23 | Zwischendecke | 56 | | | |
| 24 | Frontseite | 57 | | | |
| 25 | Auslass | 58 | | P | Vorrichtung |
| 26 | Vertikalstreifen | 59 | | | |
| 27 | Innenfilter | 60 | | | |
| 28 | Filteröffnung | 61 | | | |
| 29 | Eingriffsöffnung | 62 | | | |
| 30 | Griff | 63 | | | |
| 31 | Aufnahme/Halterung | 64 | | | |
| 32 | Schiene | 65 | | | |
| 33 | Drehwelle | 66 | | | |

## Patentansprüche

1. Vorrichtung zum Entfernen von Fremdstoffen aus einer Flüssigkeit mittels zumindest einem Filter, wobei die Flüssigkeit mit den Fremdstoffen aus einem Bad mittels einem Rotor (34) über einen Einlass (22) in einem Gehäuse (9) dem Filter zugeführt wird
**dadurch gekennzeichnet,**
**dass** sich der Einlass (22) säulenartig vertikal im Inneren des Gehäuses (9) über zumindest einen Großteil einer Rückwand (21) des Gehäuses (9) gegenüber dem Filter erstreckt und frontseitig Auslässe (25) aufweist und an zumindest einer Seitenwand (18.1,18.2) des Gehäuses (9) eine Kammer (43.1,43.2) zur Rückführung der Flüssigkeit in das Bad vorgesehen ist, die zum Inneren des Gehäuses (9) hin von einem Innenfilter (27.1,27.2) abgedeckt ist.

2. Vorrichtung nach Anspruch 1, **dadurch gekennzeichnet, dass** der säulenartige Einlass (22) im oberen Bereich sich zu einer Decke (19) des Gehäuses (9) erstreckende seitliche Auslässe (42.1,42.2) aufweist.

3. Vorrichtung nach Anspruch 1 oder 2, **dadurch gekennzeichnet, dass** der Innenfilter (27.1,27.2) aus einer Metallplatte besteht, in welche Filteröffnungen (28) eingeformt sind.

4. Vorrichtung nach Anspruch 3, **dadurch gekennzeichnet, dass** der Innenfilter (27.1,27.2) an seiner Randkante gegenüber der Rückwand (21) des Gehäuses (9) Aufnahmen bzw. Halterungen (31) für den Filter aufweist.

5. Vorrichtung nach wenigstens einem der vorhergehenden Ansprüche, **dadurch gekennzeichnet, dass** der Innenfilter (27.1,27.2) Eingriffsöffnungen (29) bzw. Griffe (30) zum Bewegen des Innenfilters (27.1,27.2) aufweist.

6. Vorrichtung nach wenigstens einem der vorhergehenden Ansprüche, **dadurch gekennzeichnet, dass** der Innenfilter (27.1,27.2) entfernbar in das Gehäuse (9) eingesetzt ist.

7. Vorrichtung nach Anspruch 6, **dadurch gekennzeichnet, dass** an der Decke (19 bzw. 23) und/oder dem Boden (20) des Gehäuses (9) Schienen (32.1-32.4) zum Führen des Innenfilters (27.1,27.2) angeordnet ist/sind.

8. Vorrichtung nach Anspruch 7, **dadurch gekennzeichnet, dass** die Schienen (32.1-32.4) so nahe an der Kammer (43.1,43.2) angeordnet sind, dass diese von dem eingesetzten Innenfilter (27.1,27.2) abgedeckt ist.

9. Vorrichtung nach wenigstens einem der vorhergehenden Ansprüche, **dadurch gekennzeichnet, dass** der Filter von einem auf klappbaren Frontdeckel (7) überdeckt ist, wobei der Frontdeckel (7) abgeschirmte Auslässe für die gereinigte Flüssigkeit aufweist.

10. Vorrichtung nach wenigstens einem der vorhergehenden Ansprüche **dadurch gekennzeichnet, dass** der Rotor (34) als Doppelrotor ausgebildet ist, indem an der Drehwelle (33) eine geschlossene Scheibe (35) sitzt, welche über radiale Flügel (37) mit einem Ring (36) verbunden ist, durch dessen Öffnung die Flüssigkeit in den Rotor (34) eintritt.

11. Vorrichtung nach Anspruch 10, **dadurch gekennzeichnet, dass** von dem Ring nach unten radiale Vorsprünge abstehen.

12. Vorrichtung nach Anspruch 10 oder 11, **dadurch gekennzeichnet, dass** der Rotor teilweise nach unten von einem Abschlussblech (39) abgedeckt ist, welches eine Öffnung (38) aufweist, deren Durchmesser größer als die Öffnung des Ringes (36) aber kleiner als der Durchmesser des Ringes (36) ist.

13. Vorrichtung nach Anspruch 12, **dadurch gekennzeichnet, dass** auf das Abschlussblech (39) ein Blechpaket (41) folgt, welches eine zylindrische Ausnehmung ausbildet, in der der Rotor (34) dreht.

14. Vorrichtung nach Anspruch 13, **dadurch gekennzeichnet, dass** die zylindrische Ausnehmung zu dem Einlass (22) hin von einer Erweiterung (40) unterbrochen ist, durch welche die Flüssigkeit vom Rotor (34) in den Einlass (22) gelangt.

## Claims

1. Device for removing foreign matter from a liquid by means of at least one filter, wherein the liquid with the foreign matter is fed from a bath to the filter by means of a rotor (34) via an inlet (22) in a housing (9)
**characterized in**
**that** the inlet (22) extends columnar vertically inside the housing (9) over at least a major part of a rear wall (21) of the housing (9) opposite to the filter and has outlets (25) on the front side and a chamber (43.1,43.2) for returning the liquid to the bath is provided on at least one side wall (18.1,18.2) of the housing (9), which is covered towards the interior of the housing (9) by an internal filter (27.1,27.2).

2. Device according to claim 1, **characterized in that** the columnar inlet (22) has lateral outlets (42.1,42.2) in the upper area extending to a ceiling (19) of the housing (9).

3. Device according to claim 1 or 2, **characterized in that** the internal filter (27.1,27.2) consists of a metal plate in which filter openings (28) are formed.

4. Device according to claim 3, **characterized in that** the internal filter (27.1,27.2) has receptacles or holders (31) for the filter at its edge opposite the rear wall (21) of the housing (9).

5. Device according to at least one of the preceding claims, **characterized in that** the internal filter (27.1,27.2) has engagement openings (29) or handles (30) for moving the internal filter (27.1,27.2).

6. Device according to at least one of the preceding claims, **characterized in that** the internal filter (27.1,27.2) is removably inserted into the housing (9).

7. Device according to claim 6, **characterized in that** rails (32.1-32.4) for guiding the internal filter (27.1,27.2) are arranged on the ceiling (19 or 23) and/or the bottom (20) of the housing (9).

8. Device according to claim 7, **characterized in that** the rails (32.1-32.4) are arranged so close to the chamber (43.1,43.2) that it is covered by the inserted internal filter (27.1,27.2).

9. Device according to at least one of the preceding claims, **characterized in that** the filter is covered by a hinged front cover (7), wherein the front cover (7) has shielded outlets for the purified liquid.

10. Device according to at least one of the preceding claims, **characterized in that** the rotor (34) is designed as a double rotor, in which a closed disc (35) is seated on the rotary shaft (33) and is connected via radial blades (37) to a ring (36), through the opening of which the liquid enters the rotor (34).

11. Device according to claim 10, **characterized in that** radial projections project downwards from the ring.

12. Device according to claim 10 or 11, **characterized in that** the rotor is partially covered downwardly by an end plate (39) which has an opening (38) whose diameter is larger than the opening of the ring (36) but smaller than the diameter of the ring (36).

13. Device according to claim 12, **characterized in that** the end plate (39) is followed by a laminated core (41) which forms a cylindrical recess in which the rotor (34) rotates.

14. Device according to claim 13, **characterized in that** the cylindrical recess is interrupted towards the inlet (22) by an extension (40) through which the liquid passes from the rotor (34) into the inlet (22).

## Revendications

1. Dispositif pour l'élimination de matières étrangères d'un liquide à l'aide d'au moins un filtre, dans lequel le liquide avec les matières étrangères est amené d'un bain au filtre à l'aide d'un rotor (34), par l'intermédiaire d'une entrée (22) dans un boîtier (9)
**caractérisé en ce**
**que** l'entrée (22) s'étend verticalement en forme de colonne à l'intérieur du boîtier (9) sur au moins une grande partie d'une paroi arrière (21) du boîtier (9) en face du filtre, et présente des sorties (25) sur le côté frontal, **et en ce qu'**il est prévu, sur au moins une paroi latérale (18.1, 18.2) du boîtier (9), une chambre (43.1, 43.2) pour le retour du liquide dans le bain, laquelle chambre est recouverte vers l'intérieur du boîtier (9) par un filtre intérieur (27.1, 27.2).

2. Dispositif selon la revendication 1, **caractérisé en ce que** l'entrée (22) en forme de colonne présente, dans la zone supérieure, des sorties (42.1, 42.2) latérales s'étendant vers un plafond (19) du boîtier (9).

3. Dispositif selon la revendication 1 ou 2, **caractérisé en ce que** le filtre intérieur (27.1, 27.2) est constitué d'une plaque métallique dans laquelle sont formées des ouvertures de filtration (28).

4. Dispositif selon la revendication 3, **caractérisé en ce que** le filtre intérieur (27.1, 27.2) présente, sur son bord périphérique par rapport à la paroi arrière (21) du boîtier (9), des logements ou des supports (31) pour le filtre.

5. Dispositif selon au moins l'une des revendications précédentes,
**caractérisé en ce que** le filtre intérieur (27.1, 27.2) présente des ouvertures de préhension (29) ou des poignées (30) permettant de déplacer le filtre intérieur (27.1, 27.2).

6. Dispositif selon au moins l'une des revendications précédentes,
**caractérisé en ce que** le filtre intérieur (27.1, 27.2) est inséré de manière amovible dans le boîtier (9).

7. Dispositif selon la revendication 6, **caractérisé en ce que** des rails (32.1-32.4) sont disposés sur le plafond (19 ou 23) et/ou le fond (20) du boîtier (9) pour le guidage du filtre intérieur (27.1, 27.2).

8. Dispositif selon la revendication 7, **caractérisé en ce que** les rails (32.1-32.4) sont disposés si près de la chambre (43.1, 43.2) que celle-ci est recouverte par le filtre intérieur (27.1, 27.2) inséré.

9. Dispositif selon au moins l'une des revendications précédentes,
**caractérisé en ce que** le filtre est recouvert d'un couvercle frontal (7) rabattable sur lui-même, dans lequel le couvercle frontal (7) présente des sorties protégées pour le liquide épuré.

10. Dispositif selon au moins l'une des revendications précédentes,
**caractérisé en ce que** le rotor (34) est conçu comme un double rotor du fait qu'un disque (35) fermé repose sur l'arbre rotatif (33), lequel disque est relié, par l'intermédiaire d'ailettes (37) radiales, à un anneau (36) par l'ouverture duquel le liquide pénètre dans le rotor (34).

11. Dispositif selon la revendication 10, **caractérisé en ce que** des saillies radiales s'étendent vers le bas à partir de l'anneau.

12. Dispositif selon la revendication 10 ou 11, **caractérisé en ce que** le rotor est partiellement recouvert vers le bas par une tôle de fermeture (39) qui présente une ouverture (38) dont le diamètre est supérieur à l'ouverture de l'anneau (36), mais inférieur au diamètre de l'anneau (36).

13. Dispositif selon la revendication 12, **caractérisé en ce que** la tôle de fermeture (39) est suivie d'un empilage de tôles (41) qui forme un évidement cylindrique dans lequel le rotor (34) tourne.

14. Dispositif selon la revendication 13, **caractérisé en ce que** l'évidement cylindrique est interrompu vers l'entrée (22) par un élargissement (40) à travers lequel le liquide passe du rotor (34) à l'entrée (22).
